# EUROPÄISCHE PATENTANMELDUNG

(11) **EP 4 624 287 A1**
(43) Veröffentlichungstag der Anmeldung: **01.10.2025**
(21) Anmeldenummer: 25156307.8
(22) Anmeldetag: 06.02.2025
(51) Int. Cl.: B60T 7/10, B60T 13/66, B62D 55/00, B62D 11/18, B62D 55/06

(54) **PISTENRAUPE MIT EINEM KETTENLAUFWERK**

(30) Priorität: 28.03.2024 DE 102024108900
(71) Anmelder: Kässbohrer Geländefahrzeug AG, 88471 Laupheim (DE)
(72) Erfinder: Mayer, Stephan, 89597 Munderkingen (DE); Frank, Marc, 89160 Bollingen (DE); Luigart, Christof, 89155 Erbach (DE); Mendler, Jürgen, 88457 Kirchdorf (DE); Wiedmann, Markus, 88477 Schönebürg (DE)
(74) Vertreter: Patentanwälte Ruff, Wilhelm, Beier, Dauster & Partner mbB

(57) **Zusammenfassung**

2.1 Eine Pistenraupe mit einem Kettenlaufwerk, das auf gegenüberliegenden Laufwerksseiten jeweils eine Fahrkette sowie ein Turasrad aufweist, wobei jedes Turasrad mittels jeweils eines mit dem Turasrad mechanisch gekoppelten elektrischen Fahrmotors antreibbar ist, sowie mit einer Fahrantriebsteuerung, die die beiden elektrischen Fahrmotoren ansteuert, ist bekannt.

2.2 Erfindungsgemäß ist jedem Turasrad jeweils eine Betriebsbremse zugeordnet, die mittels einer elektronischen Steuereinheit stufenlos regelbar ist, und jedem Turasrad ist jeweils ein eine Ist-Drehzahl erfassender Sensor zugeordnet, der an die Steuereinheit für einen Vergleich mit einer abgespeicherten Soll-Drehzahl angeschlossen ist, und die Betriebsbremse wird mittels der Steuereinheit gesteuert abhängig von einem Überschreiten der Soll-Drehzahl durch die Ist-Drehzahl derart, dass die Betriebsbremse das Turasrad auf die jeweilige Soll-Drehzahl abbremst.

2.3 Einsatz zur Pflege und Gestaltung von Schneepisten.

## Beschreibung

Die Erfindung betrifft eine Pistenraupe mit einem Kettenlaufwerk, das auf gegenüberliegenden Laufwerksseiten jeweils eine Fahrkette sowie ein Turasrad aufweist, wobei jedes Turasrad mittels jeweils eines mit dem Turasrad mechanisch gekoppelten elektrischen Fahrmotors antreibbar ist, sowie mit einer Fahrantriebsteuerung, die die beiden elektrischen Fahrmotoren ansteuert.

Derartige Pistenraupen sind aus der EP 2 655 165 B1 oder der EP 3 736 154 B1 bekannt. Die jeweilige Pistenraupe ist mit einem Kettenlaufwerk versehen, das auf gegenüberliegenden Seiten eines Fahrwerksrahmens der Pistenraupe jeweils eine umlaufende Fahrkette aufweist. Die jeweilige Fahrkette ist um ein Spannrad, mehrere Laufräder sowie ein Turasrad herumgeführt und wird durch das jeweilige Turasrad angetrieben. Zum Antrieb des jeweiligen Turasrads ist jedem Turasrad ein elektrischer Fahrmotor zugeordnet, der unter Zwischenschaltung eines Planetengetriebes mechanisch mit dem jeweiligen Turasrad verbunden ist. Bei Bergabfahrt der jeweiligen Pistenraupe entwickeln die elektrischen Fahrmotoren selbst kein ausreichendes Widerstandsmoment, um ein ungewünschtes Beschleunigen der Pistenraupe zu vermeiden. Bei den bekannten Pistenraupen sind daher zusätzliche Funktionseinrichtungen vorgesehen, die für entsprechende Bergabfahrten einen ausreichenden Widerstand aufbauen, um eine unbeabsichtigte Beschleunigung der Pistenraupe zu vermeiden.

Aufgabe der Erfindung ist es, eine Pistenraupe der eingangs genannten Art zu schaffen, die mit einfachen Mitteln ein zuverlässiges und sicheres Bergabfahren ermöglicht.

Diese Aufgabe wird dadurch gelöst, dass jedem Turasrad jeweils eine Betriebsbremse zugeordnet ist, die mittels einer elektronischen Steuereinheit stufenlos steuerbar ist, und dass jedem Turasrad jeweils ein eine Ist-Drehzahl erfassender Sensor zugeordnet ist, der an die Steuereinheit für einen Vergleich mit einer abgespeicherten Soll-Drehzahl angeschlossen ist, und dass die Betriebsbremse mittels der Steuereinheit gesteuert wird abhängig von einem Überschreiten der Solldrehzahl durch die Ist-Drehzahl derart, dass die Betriebsbremse das Turasrad abbremst auf die jeweilige Soll-Drehzahl. Die erfindungsgemäße Pistenraupe kann mit einem rein batterieelektrischen Fahrantrieb oder auch mit einem seriellen Hybridantrieb versehen sein, d.h. mit einem dieselelektrischen Fahrantrieb. Die Betriebsbremse kann hydraulisch oder auch elektrisch betätigt werden. Bei einer bevorzugten Ausführungsform der Erfindung wird die Betriebsbremse mittels Hydraulik über elektrisch proportionale Ventile angesteuert. Erfindungsgemäß ist somit eine dynamische Betriebsbremse vorgesehen, welche direkt entsprechende mechanische Energie abbaut, falls die jeweilige Fahrkette, d.h. das jeweilige Turasrad, bei Bergabfahrt der Pistenraupe zu schnell werden sollte. Mittels der Betriebsbremse ist es möglich, kritische Betriebszustände, die durch eine Bergabfahrt der Pistenraupe auftreten können, zu beherrschen, ohne dass die elektrischen Fahrantriebe selbst so groß dimensioniert werden müssen, dass durch diese kritische Betriebszustände aufgenommen werden können. Eine entsprechende Fahrgeschwindigkeit bei Bergabfahrt ist trotz der elektrischen Fahrmotoren, die batterieelektrisch betrieben werden, unabhängig von einem Batteriezustand und der möglicherweise maximal zulässigen Stromaufnahme, da die Betriebsbremse das jeweilige Turasrad mechanisch abbremst. Dies gilt auch für eine Pistenraupe mit dieselelektrischem Hybridantrieb zum Schutz des Dieselmotors. Die Betriebsbremse gemäß der Erfindung bremst das Turasrad somit mechanisch ab unabhängig davon, ob sie hydraulisch oder elektrisch ansteuerbar ist. Jede Betriebsbremse jedes Turasrads ist individuell ansteuerbar. Die Betriebsbremse wird nicht durch ein entsprechendes Bremssignal eines Fahrers der Pistenraupe betätigt, sondern vielmehr ausschließlich durch die elektronische Steuereinheit abhängig von einem Soll-Ist-Vergleich der Drehzahl des jeweiligen Turasrads. Durch die erfindungsgemäße Lösung kann ein Bremschopper zur Vernichtung von Bremsenergie entfallen. Damit werden Bauraum, Kosten, Gewicht und Wärmeeintrag ins Kühlsystem, die durch einen flüssigkeitsgekühlten Bremschopper anfallen, vermieden werden. Die bei der Erfindung durch den aktiven Bremseingriff entstehende Wärmeenergie wird vorzugsweise über ein Gehäuse eines Planetengetriebes im Bereich jedes Turasrades an eine Fahrzeugumgebung abgeleitet. Bei einer Fahrt der Pistenraupe im Schnee ergibt sich somit eine effektive Wärmeableitung in den Schnee.

In Ausgestaltung der Erfindung ist die Betriebsbremse mittels eines hydraulischen Steuerkreises hydraulisch betätigbar. Der hydraulische Steuerkreis ist durch die elektronische Steuereinheit steuerbar oder regelbar. Damit ist die Bremsfunktion der Betriebsbremse mechanisch, wohingegen die Steuerung oder Regelung hydraulisch erfolgt.

In weiterer Ausgestaltung der Erfindung ist die elektronische Steuereinheit mit wenigstens einem elektrisch-hydraulischen Steuerglied des hydraulischen Steuerkreises gekoppelt. Vorzugsweise ist als Steuerglied ein direkt gesteuertes, elektrisch proportionales Dreiwege-Druckreduzierventil vorgesehen. Dadurch kann proportional zu einer entsprechenden hydraulischen Druckänderung ein komplementäres mechanisches Bremsmoment durch die Betriebsbremse aufgebaut werden. Entsprechend überschüssige Energie wird hierdurch direkt abgebaut.

In weiterer Ausgestaltung der Erfindung ist jedes Turasrad durch den jeweiligen elektrischen Fahrmotor mittels jeweils eines zwischengeschalteten Planetengetriebes antreibbar, und der Sensor zur Ist-Drehzahlerfassung ist dem elektrischen Fahrmotor zugeordnet. Dies ist eine besonders einfache und funktionssichere Ausgestaltung, indem der Sensor an einem Antriebsstrang des elektrischen Fahrmotors angeordnet ist, der direkt mechanisch drehschlüssig mit dem Turasrad verbunden ist. Der Sensor kann auch am Planetengetriebe angeordnet sein, das ebenfalls im Antriebsstrang des elektrischen Fahrmotors liegt. Bei einem rein elektrischen Fahrantrieb ist als Sensor ein digitaler Resolver vorgesehen, der an einer Abtriebswelle des jeweiligen elektrischen Fahrmotors entsprechende Drehzahlen abgreift. Hierdurch ergibt sich eine besonders gute Signalauflösung der an die Steuereinrichtung übermittelten Istdrehzahl-Signale. Bei einem dieselelektrischen Fahrantrieb ist der Sensor zur Istdrehzahlerfassung vorzugsweise am Planetengetriebe positioniert.

In weiterer Ausgestaltung der Erfindung ist den beiden Turasrädern eine statische Haltebremse zugeordnet, die bei einer Funktionsstörung der Fahrantriebsteuerung oder einer Funktionsstörung der Betriebsbremse die Turasräder mechanisch blockiert. Die statische Haltebremse kann entweder dazu ausgebildet sein, gemeinsam beide Turasräder zeitgleich zu blockieren, oder aber zwei Haltebremsenteile aufzuweisen, die jedes Turasrad jeweils individuell mechanisch blockieren. Die statische Haltebremse dient dazu, für einen Notfall, insbesondere einem dramatischen Druckabfall in einem Hydrauliksystem der Pistenraupe, das Kettenlaufwerk mit maximalem Bremsmoment abzubremsen, um ein unerwünschtes Weiterrollen der Pistenraupe bei einem Funktionsausfall der Fahr- oder Lenkfunktion zu verhindern.

In weiterer Ausgestaltung der Erfindung ist die Haltebremse als federdruckgeschaltete hydraulische Lamellenbremse ausgeführt, und die Betriebsbremse ist in die Lamellenbremse integriert durch einen auf die Lamellenbremse wirkenden Bremskolben, der durch das elektrisch-hydraulische Steuerglied steuerbar ist. Damit wird sowohl für die Betriebsbremse als auch für die Haltebremse grundsätzlich dasselbe mechanische Bremssystem verwendet, wodurch Bauteile sowie Montageaufwand eingespart werden können.

In weiterer Ausgestaltung der Erfindung weist die elektronische Steuereinheit ein elektronisches Regelsystem auf, insbesondere einen PID-Regler, das durch Ansteuerung der Betriebsbremse eine Ist-Drehzahl jedes Turasrads abhängig von vorgegebenen Soll-Drehzahlen stufenlos regelt. Damit wird eine Drehzahl der Turasräder und damit auch der elektrischen Fahrmotoren überwacht und auf die jeweils gewünschte Soll-Drehzahl eingeregelt. Die elektronische Steuereinheit weist einen Speicher auf, in dem entsprechende Soll-Drehzahlen abgespeichert sind, die einen sicheren Betrieb der Pistenraupe auch bei Bergabfahrt gewährleisten.

In weiterer Ausgestaltung der Erfindung ist ein Notöffnungssystem für die Betriebsbremse und/oder die Haltebremse vorgesehen, das ein manuell bedienbares Absperrglied und ein Anschlusselement für einen der Betriebsbremse und der Haltebremse zugeordneten Hydraulikkreis vorsieht, wobei das Absperrglied dazu vorgesehen ist, den Hydraulikkreis abzutrennen, und wobei das Anschlusselement für die Kopplung mit einer externen Pumpe ausgebildet ist, um in dem Hydraulikkreis einen Hydraulikdruck aufzubauen, der die Betriebsbremse und/oder die Haltebremse löst. Die externe Pumpe ist vorzugsweise eine manuell bedienbare Handpumpe. Das Absperrglied ist vorzugsweise ein Absperrhahn, der ebenfalls manuell bedient werden kann. Diese Ausgestaltung ist insbesondere vorteilhaft, um die Pistenraupe abschleppen zu können. Denn bei starkem Druckverlust innerhalb des hydraulischen Steuerkreises geht die Haltebremse in ihre Blockierfunktion. Durch Abtrennung des Hydraulikkreises von einem übrigen Hydrauliksystem der Pistenraupe kann über die entsprechende Handpumpe isoliert im Hydraulikkreis wieder Druck aufgebaut werden, der gegen eine entsprechende Federdruckkraft der Lamellenbremse die Bremskolben wieder öffnet.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch eine Ausführungsform einer erfindungsgemäßen Pistenraupe in einer Seitenansicht und
- Fig. 2: schematisch ein Blockschaubild einer Betriebsbremsenfunktion der Pistenraupe nach Fig. 1.

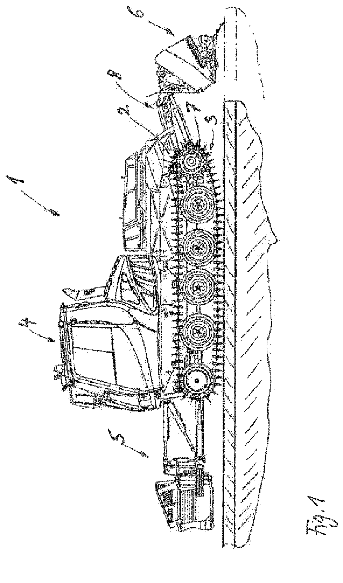

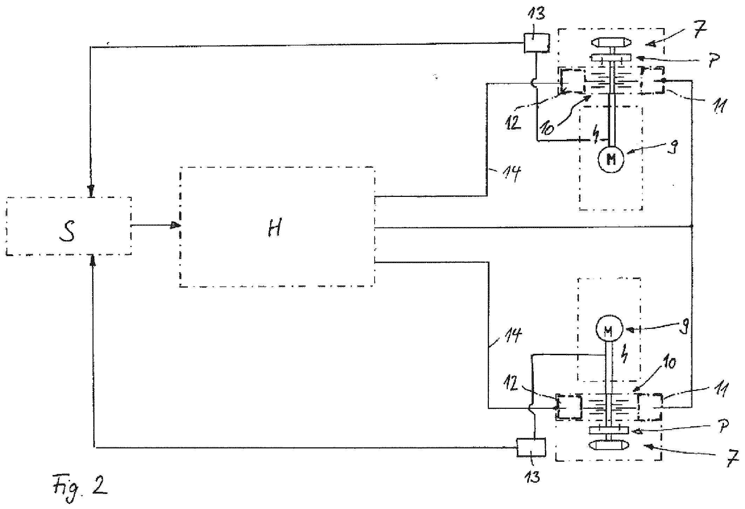

Eine Pistenraupe 1 nach den Fig. 1 und 2 weist einen Fahrwerksrahmen 2 auf, der ein Kettenlaufwerk trägt. Frontseitig ist auf dem Fahrwerksrahmen 2 ein Fahrerhaus 4 vorgesehen. Das Kettenlaufwerk weist auf zwei relativ zum Fahrwerksrahmen 2 gegenüberliegenden Laufwerksseiten jeweils eine umlaufende Fahrkette 3 auf. Die Fahrkette 3 auf jeder Laufwerksseite ist frontseitig um ein Spannrad und heckseitig um ein Turasrad 7 umgelenkt. Zwischen dem frontseitigen Spannrad und dem heckseitigen Turasrad 7 stützen mehrere Laufräder die Fahrkette 3.

Frontseitig ist an dem Fahrwerksrahmen 2 ein Räumschild 5 angebaut. Heckseitig ist am Fahrwerksrahmen 2 ein Heckgeräteträger 8 vorgesehen, der eine Heckfräse 6 trägt.

Die Pistenraupe weist für das Kettenlaufwerk ein Fahrantriebsystem auf. Jedes der beiden Turasräder 7 beider Laufwerksseiten wird angetrieben durch jeweils einen elektrischen Fahrmotor 9, der jeweils mittels eines Planetengetriebes P mechanisch und drehschlüssig mit dem jeweiligen Turasrad 7 gekoppelt ist. Die beiden elektrischen Fahrmotoren 9 werden mit einer nicht näher dargestellten Fahrantriebsteuerung des Fahrantriebsystems abhängig von einer entsprechenden Bedienfunktion eines in dem Fahrerhaus 4 positionierten Fahrers gesteuert. Bei einer durch den Fahrer initiierten Lenkfunktion werden die Fahrantriebe 9 unterschiedlich angesteuert. Bei einer Geradeausfahrt erfolgt die Ansteuerung der Fahrmotoren 9 mittels der Fahrantriebsteuerung durch die Bedienung eines Fußpedals im Fahrerhaus 4.

Da die elektrischen Fahrmotoren 9 im Gegensatz zu hydraulischen Fahrmotoren, wie sie für den Antrieb von Turasrädern aus dem Stand der Technik bekannt sind, im Fahrbetrieb keinen Selbsthalt ermöglichen, sieht die Erfindung für jedes Turasrad eine zusätzliche Betriebsbremse 12 vor, die nachfolgend näher beschrieben wird. Die beiden Betriebsbremsen 12, die den beiden Turasrädern 7 zugeordnet sind, sind individuell oder gemeinsam ansteuerbar. Die beiden Betriebsbremsen 12 sind dazu vorgesehen, eine unerwünschte Beschleunigung oder Geschwindigkeitserhöhung der Pistenraupe 1 bei Bergabfahrten zu vermeiden. Derartige Beschleunigungen oder Erhöhungen der Fahrgeschwindigkeit resultieren aus einer auf die Pistenraupe 1 bei einer Bergabfahrt wirkenden Hangabtriebskraft. Jede Betriebsbremse 12 ist hydraulisch betätigt und weist jeweils einen stufenlos hydraulisch steuerbaren Bremskolben auf, der in Fig. 2 jeweils anhand des Pfeils für das jeweilige Bezugszeichen 12 erkennbar ist. Der jeweilige Bremskolben wirkt jeweils auf eine hydraulische Lamellenbremse 10, die koaxial mechanisch in einen Antriebsstrang zwischen dem jeweiligen elektrischen Fahrmotor 9 und dem Planetengetriebe P sowie dem Turasrad 7 eingebunden ist. Die jeweilige Lamellenbremse 10 ist bei normalem hydraulischem Betriebsdruck eines Hydraulikkreises 14 offen. Sobald in nachfolgend näher beschriebener Weise die jeweilige Betriebsbremse 12 betätigt wird, werden entsprechende Lamellen der Lamellenbremse 10 zusammengedrückt, wodurch sich eine Bremswirkung für das entsprechende Turasrad 7 ergibt. Dies erfolgt durch zusätzliche hydraulische Druckbeaufschlagung des Bremskolbens der Betriebsbremse 12, der auf die Lamellen der Lamellenbremse 10 wirkt.

Der jeweiligen Lamellenbremse 10 ist noch eine weitere Funktion zugeordnet, nämlich die Funktion einer stationären Haltebremse 11, die in Fig. 2 jeweils lediglich als Funktionsblock dargestellt ist. Die statische Haltebremse 11 weist in nicht näher dargestellter Weise einen federdruckbelasteten Zusatzbremskolben auf, der die Lamellen der jeweiligen Lamellenbremse 10 mechanisch durch entsprechenden Druck von in der Lamellenbremse 10 integrierten Schraubenfedern mechanisch abbremst, sobald im Hydraulikkreis 14 ein dramatischer Druckverlust, insbesondere ein Druckabfall auf null, auftritt. Bei normalem Betriebsdruck innerhalb des Hydraulikkreises 14 wird der Zusatzbremskolben der statischen Haltebremse 11 offengehalten. Zur Betätigung der Betriebsbremse 12 wird der Bremskolben der Betriebsbremse 12 mit einem Druck beaufschlagt, der über Null liegt. Der Zusatzbremskolben der statischen Haltebremse 11 und der Bremskolben der Betriebsbremse 12 können in der Lamellenbremse 10 koaxial zueinander vorgesehen sein.

Die beiden Betriebsbremsen 12 sind unabhängig von einer Bedienung durch einen Fahrer der Pistenraupe 1 regelbar. Hierzu ist den Betriebsbremsen 12 ein hydraulischer Bremssteuerblock H zugeordnet, der eine gemeinsame oder individuelle Ansteuerung der beiden Betriebsbremsen 12 vornimmt. Der Bremssteuerblock H weist für jede Betriebsbremse 12 wenigstens ein direkt gesteuertes, elektrisch proportionales Dreiwege-Druckreduzierventil auf, das - unabhängig von weiteren Hydraulikkomponenten des Hydrauliksteuerblocks H - durch eine elektronische Steuereinheit S angesteuert wird. Mittels der elektronischen Steuereinheit S erfolgt eine Drehzahlregelung der Betriebsbremsen 12 in nachfolgend näher beschriebener Weise. Jedem Turasrad 7 ist ein Drehzahlsensor 13 zugeordnet, der beim dargestellten Ausführungsbeispiel gemäß Fig. 2 jeweils an einem Antriebsstrang des jeweiligen elektrischen Fahrmotors 9 vorgesehen ist. Alternativ kann der Drehzahlsensor 13 jeweils auch am Planetengetriebe P angeordnet sein. Die beiden Drehzahlsensoren 13 sind an die elektronische Steuereinheit S angeschlossen, um Ist-Drehzahlen der Turasräder 7 an die elektronische Steuereinheit S zu übermitteln. Die elektronische Steuereinheit S weist verschiedenen Fahrbetriebszuständen zugeordnete, abgespeicherte Soll-Drehzahlen auf, mit denen die durch die Drehzahlsensoren 13 gelieferten Ist-Drehzahlen verglichen werden. Wenn somit durch die Fahrantriebsteuerung für die elektrischen Fahrmotoren 9 aufgrund einer Bedienung des Fahrpedals innerhalb des Fahrerhauses 4 durch den Fahrer eine bestimmte Soll-Drehzahl vorgegeben wird, die dann auch einer entsprechenden Soll-Drehzahl der Turasräder 7 für eine entsprechende Fahrgeschwindigkeit entspricht, und die Drehzahlsensoren 13 Ist-Drehzahlen erfassen, die höher sind als die durch die Fahrantriebsteuerung vorgegebene Soll-Drehzahl, dann steuert die elektronische Steuereinheit S den Hydrauliksteuerblock H an, um eine Bremswirkung über die Betriebsbremsen 12 auf die Lamellenbremsen 10 auszuüben, die die Turasräder 7 wieder auf die Soll-Drehzahl einbremsen. Dabei wird über die elektronische Steuereinheit S das wenigstens eine elektrisch proportionale Dreiwege-Druckreduzierventil bestromt, wodurch der Hydrauliksteuerblock H im jeweiligen Bremskolben der Betriebsbremse 12 eine hydraulische Druckerhöhung vornimmt, die das gewünschte Bremsmoment über die jeweilige Lamellenbremse 10 auf das Turasrad 7 ausübt. Die elektrische Ansteuerung des Dreiwege-Druckreduzierventils erfolgt proportional zur gewünschten hydraulischen Druckerhöhung. Durch den permanenten Vergleich zwischen Ist- und Soll-Drehzahlen erfolgt eine stufenlose Regelung der Betriebsbremsen 12. Die beiden Betriebsbremsen 12 bilden eine linke und eine rechte Betriebsbremse 12, wobei die linke Betriebsbremse 12 dem - in normaler Fahrtrichtung der Pistenraupe 1 gesehen - linken Turasrad 7 und die rechte Betriebsbremse 12 dem rechten Turasrad 7 zugeordnet ist. Um die Lenkbarkeit der Pistenraupe 1 nicht zu beeinträchtigen, können die linke und die rechte Betriebsbremse 12 unabhängig voneinander angesteuert werden. Die beschriebene Regelung der jeweiligen Betriebsbremse 12 erfolgt in einem geschlossenen Regelkreis, ohne dass eine Bedienfunktion innerhalb des Fahrerhauses 4 für den Fahrer vorhanden ist, die eine Eingriffsmöglichkeit in die Betätigung der Betriebsbremsen 12 zulässt. Hierzu ist in der elektronischen Steuereinheit S und in dem Hydrauliksteuerblock H eine PID-Regelung vorgesehen, die seitenunabhängig erfolgt, sobald die Ist-Drehzahl des jeweiligen Turasrads 7 über der Soll-Drehzahl liegt.

In nicht näher dargestellter Weise ist dem beschriebenen Bremssystem für die Turasräder 7 der Pistenraupe 1 noch eine Notfallfunktion zugeordnet, die für den Fall einsetzbar ist, dass die Pistenraupe 1 abgeschleppt werden muss. Für einen solchen Notfall können die Betriebsbremsen 12 und/oder die statische Haltebremse 11 durch externe Bedienung geöffnet werden. Hierzu ist in nicht näher dargestellter Weise in dem Hydraulikkreis 14 jeweils ein Absperrhahn vorgesehen, der den Hydraulikkreis 14 vom Hydrauliksteuerblock H trennt. Zudem ist- ebenfalls in nicht näher dargestellter Weise - dem Hydraulikkreis 14 ein Anschluss zugeordnet, über den eine externe Hydraulikpumpe angeschlossen werden kann. Diese Hydraulikpumpe kann als Handpumpe ausgeführt sein. Dadurch wird innerhalb des Hydraulikkreises 14 ein Hydraulikdruck aufgebaut, der zu einem zwangsläufigen Öffnen der Zusatzbremskolben der Haltebremse 11 führt. Damit sind beide Turasräder 7 freidrehend, so dass die Pistenraupe 1 abgeschleppt werden kann.

## Patentansprüche

1. Pistenraupe (1) mit einem Kettenlaufwerk, das auf gegenüberliegenden Laufwerksseiten jeweils eine Fahrkette (3) sowie ein Turasrad (7) aufweist, wobei jedes Turasrad (7) mittels jeweils eines mit dem Turasrad (7) mechanisch gekoppelten, elektrischen Fahrmotors (9) antreibbar ist, sowie mit einer Fahrantriebsteuerung, die die beiden elektrischen Fahrmotoren (9) ansteuert, **dadurch gekennzeichnet, dass** jedem Turasrad (7) jeweils eine Betriebsbremse (12) zugeordnet ist, die mittels einer elektronischen Steuereinheit (S) stufenlos regelbar ist, und dass jedem Turasrad (7) jeweils ein eine Ist-Drehzahl erfassender Sensor (13) zugeordnet ist, der an die Steuereinheit (S) für einen Vergleich mit einer abgespeicherten Soll-Drehzahl angeschlossen ist, und dass die Betriebsbremse (12) mittels der Steuereinheit (S) gesteuert wird abhängig von einem Überschreiten der Soll-Drehzahl durch die Ist-Drehzahl derart, dass die Betriebsbremse (12) das Turasrad (7) auf die jeweilige Soll-Drehzahl abbremst.

2. Pistenraupe (1) nach Anspruch 1, **dadurch gekennzeichnet, dass** die Betriebsbremse (12) mittels eines hydraulischen Steuerkreises hydraulisch betätigbar ist.

3. Pistenraupe (1) nach Anspruch 1 oder 2, **dadurch gekennzeichnet, dass** die elektronische Steuereinheit (S) mit wenigstens einem elektrisch-hydraulischen Steuerglied des hydraulischen Steuerkreises gekoppelt ist.

4. Pistenraupe (1) nach einem der vorhergehenden Ansprüche, **dadurch gekennzeichnet, dass** jedes Turasrad (7) durch den jeweiligen elektrischen Fahrmotor (9) mittels jeweils eines zwischengeschalteten Planetengetriebes (P) antreibbar ist, und dass der Sensor (3) zur Ist-Drehzahlerfassung dem elektrischen Fahrmotor (9) zugeordnet ist.

5. Pistenraupe (1) nach einem der vorhergehenden Ansprüche, **dadurch gekennzeichnet, dass** den beiden Turasrädern (7) eine statische Haltebremse (11) zugeordnet ist, die bei einer Funktionsstörung der Fahrantriebsteuerung oder einer Funktionsstörung der Betriebsbremse (12) die Turasräder (7) mechanisch blockiert.

6. Pistenraupe (1) nach Anspruch 5, **dadurch gekennzeichnet, dass** die statische Haltebremse (11) bei einem hydraulischen Druckabfall mechanisch aktiviert wird.

7. Pistenraupe (1) nach Anspruch 6, **dadurch gekennzeichnet, dass** die Haltebremse (11) als federdruckgeschaltete hydraulische Lamellenbremse (10) ausgeführt ist, und dass die Betriebsbremse (12) in die Lamellenbremse (10) integriert ist durch einen auf die Lamellenbremse (10) wirkenden Bremskolben, der durch das elektrisch-hydraulische Steuerglied steuerbar ist.

8. Pistenraupe (1) nach Anspruch 7, **dadurch gekennzeichnet, dass** ein federdruckbelasteter Zusatzbremskolben der Haltebremse (11) und der Bremskolben der Betriebsbremse (12) koaxial zueinander in der Lamellenbremse (10) integriert sind.

9. Pistenraupe (1) nach einem der vorhergehenden Ansprüche, **dadurch gekennzeichnet, dass** die elektronische Steuereinheit (S) ein elektronisches Regelsystem aufweist, insbesondere eine PID-Regelung, die durch Ansteuerung der Betriebsbremse (12) eine Ist-Drehzahl jedes Turasrads (7) abhängig von vorgegebenen Soll-Drehzahlen stufenlos regelt.

10. Pistenraupe (1) nach einem der vorhergehenden Ansprüche, **dadurch gekennzeichnet, dass** ein Notöffnungssystem für die Betriebsbremse (12) und/oder die Haltebremse (11) vorgesehen ist, das ein manuell bedienbares Absperrglied und ein Anschlusselement für einen der Betriebsbremse (12) und der Haltebremse (11) zugeordneten Hydraulikkreis vorsieht, wobei das Absperrglied dazu vorgesehen ist, den Hydraulikkreis zu isolieren, und wobei das Anschlusselement für die Kopplung mit einer externen Pumpe ausgebildet ist, um in dem Hydraulikkreis einen Hydraulikdruck aufzubauen, der die Betriebsbremse (12) und/oder die Haltebremse (11) löst.
